# EUROPEAN PATENT SPECIFICATION

(11) **EP 1 939 488 B1**
(45) Date of publication and mention of the grant of the patent: **08.07.2020**
(21) Application number: 06026981.8
(22) Date of filing: 28.12.2006
(51) Int. Cl.: F16G 5/16, B23K 26/00

(54) **Method for processing a metal band, a continuous metal band and pushbelt in which the metal band is used**
Verfahren zum Herstellen eines Metallbandes, endlosses Metallband und Schubtreibriemen in dem das Metallband verwendet ist.
Méthode de fabrication d'une bande métallique, bande métallique sans fin et courroie d'entrainement dans laquelle la bande métallique est utilisée

(43) Date of publication of application: 02.07.2008
(73) Proprietor: Robert Bosch GmbH, 70442 Stuttgart (DE)
(72) Inventor: Crebolder, Cornelia Adriana Elizabeth, 4708 NN Roosendaal (NL)
(74) Representative: Plevier, Gabriël Anton Johan Maria

(56) References cited:
- WO-A-2006/004391
- WO-A-2006/054885
- DE-A1- 10 163 301
- DE-C1- 10 034 806
- US-A- 6 155 757
- US-A1- 2006 081 573

## Description

The present invention firstly relates to a method for processing a continuous metal band, to a continuous metal band thus processed and also to a pushbelt in which such metal band is used, as described, inter alia, in the preamble of claim 1.

A pushbelt of this type, as well as the continuous metal band used therein, is generally known, for example from European Patent Publication EP-A-0181670 in the name of applicant. The metal band is generally incorporated in the pushbelt in the form of one or two sets of a number of mutually nested continuous metal bands.

Hitherto, a metal band of this type, at least on an industrial scale, is shaped by cutting off a ring section from a metal tube formed from a base material in sheet form, followed by plastically deforming such ring section to produce the band with a desired radial thickness and tangential or circumferential length with the aid of a rolling process, optionally preceded and/or followed by one or more heat treatments of the material.

Before rolling, the band is subjected to a tumbling process, which is known per se and in which the band is processed in a receptacle containing suitably moving, i.e. agitated, deburring medium such as tumbling stones. The tumbling process serves to remove burrs formed at the axially oriented side faces of the band when it was cut off from the tube. In this process also the edges between the said side faces and radially oriented main surfaces of the band are shaped, i.e. are rounded off.

It has, however, been found that this known shaping process can be improved upon. For example, typically the axially oriented side faces of the band, as ultimately formed, still have an undesirable irregularity, for example in the form of scratches therein. Further, the known tumbling process as such is a relatively expensive and difficult to automate process and can easily contaminate the product with small pieces of the tumbling stones or metal fragments, such as remains of the removed burrs. Such irregularities and contaminations are likely to adversely effect the service life of the band and that of the pushbelt as a whole. Moreover, they are already undesirable for mere optical reasons.

It is noted that DE10034806C1 discloses a method for first deburring and for subsequently shaping a burred edge between two faces of a work piece by means of two subsequent treatments by laser radiation. Further according to DE10034806C1, after such first two treatments by laser radiation, the surface of the edge can be made smoother in a third treatment by laser radiation.

The object of the present invention is to improve the quality or at least the appearance of the axially oriented side faces of the belt's band component considerably, and preferably to provide a suitable alternative to the known tumbling process. According to the invention, this object is achieved by a method which comprises at least the characterizing features of Claim 1 hereinafter.

With the method according to the invention, after being cut off from the tube or after being formed otherwise, at least a part of the lateral edge of the band which extends over the full radial thickness of the band is melted and subsequently allowed to solidify again. In this method any burrs, scratches and the like disappear from the side face of the band. Moreover, the side face including its edges adjacent to the radially oriented main surfaces of the band is automatically and favourably provided with a rounding due to the surface tension of the molten band material. Such naturally formed shape of the side face was found to provide the band with very good mechanical properties such as a good resistance against fatiguing.

According to the invention, preferably a laser is used to melt the material. This has the advantage that the melting process can be controlled with relative ease and that as little flow as possible occurs in the molten material. A spot on the side face that is irradiated by the laser approximates the height of the side face, which height corresponds to the radial thickness of the band. In order to efficiently process the entire side face of the band, either the laser beam can be moved along the circumference of the band, closely following the contour thereof, or the band itself is rotated. Hereby, the intensity and the duration of the laser irradiation of the side face are preferably controlled such that the side edges of the band are melted over an axial distance or depth that corresponds with the said height of the side face.

Further according to the invention, the side face of the band is preferably processed while facing upwards or downwards with respect to the gravitational force, the laser preferably being mounted straight above or, respectively below the band. In this manner the melted part of the side edge will solidify into a favourably essentially symmetrical shape as seen in the radial direction. Hereby, the band is preferably mounted in a tensioned state on a circular template. Alternatively, it is a favourable possibility to wrap the band around two rollers, at least one whereof can be rotationally driven to rotate the band. In this arrangement, the laser beam is aligned to irradiate the side face in a stretch section of the band in between the rollers.

Still, the band may also be processed with its main surfaces positioned horizontally, which setup allows a simultaneous processing of both side faces in accordance with the present invention.

The invention also relates to a device capable of carrying out the method according to the invention for shaping a continuous metal band described in the above.

The invention will be explained in more detail below on the basis of an example, in which:
Figure 1 schematically shows the existing process for slitting a ring section from a tube;
Figure 2 is a schematic representation of a cross section of a ring section typically obtained by the known slitting process to be used as a continuous band component for a pushbelt;
Figure 3 schematically shows the existing process for tumbling continues bands;
Figure 4 is a photographic representation of a cross section of the continuous band obtained by the known slitting and tumbling processes;
Figure 5 illustrates a schematic side elevation of the very basics of a device for carrying out the process proposed by the present invention
Figure 6 is a photographic representation of a cross section of the continuous band obtained when the known slitting process is followed by the process proposed by the present invention; and in which
Figure 7 is a photographic representation of a cross section of the continuous band obtained when the process proposed by the present invention is followed by the known rolling process.

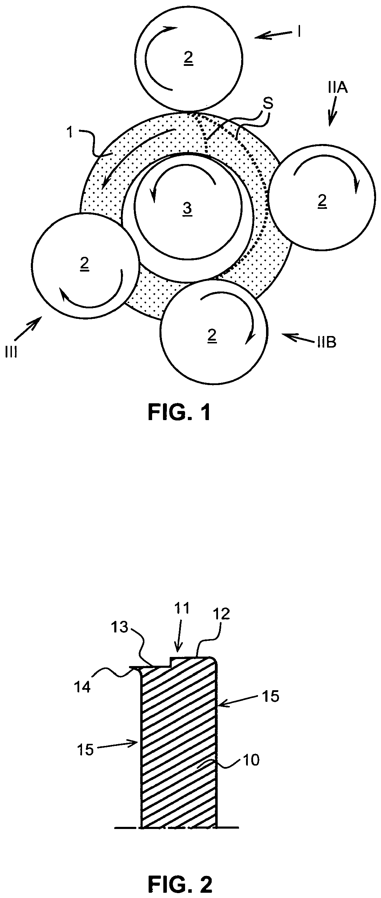

A pushbelt, generally known per se, comprises an endless tensile means and a plurality of transverse elements, which are accommodated slidable along the longitudinal circumference of the tensile means. The endless tensile means consists of one or more sets of mutually nested continuous metal bands 10 that are prepared from relatively thin -i.e. typically about 0.4 mm thick- metal ring sections by means of a/o rolling, annealing, calibrating, hardening and nitriding processes. The ring sections themselves are often obtained by cutting, i.e. slitting from a tube-like base part 1, or tube 1 for short, which is usually made of sheet metal material, which process step is schematically represented by figure 1 along a cross section square to the axial direction of the tube 1 and which process step has been described in detail in the International patent application published as WO-A-2005/039812.

In figure 1 a tube 1 is represented along which the circles 2 indicate radial positions of an essentially cylindrical and rotatable cutting tool 2 relative to the tube 1 during the cutting process. However, the cutting tool 2 in fact has a fixed radial position, whereas the tube 1 is rotated with respect thereto. Inside the tube 1 a counter tool 3 provides a support for the tube 1 when the cutting tool 2 moves radially inward during the cutting process. In this cutting process the tube is mounted on a rotatable holder, which is not represented. During the cutting, both the tube and the two knifes rotate, however only one of these elements is rotatably driven. In the figure 1 the arrows provide the relative rotational movement of the components.

Some relative radial positions of the cutting tool 2, which as mentioned in reality has a fixed tangential position at the circumference of the tube 1, are represented by the Roman numbers, which positions illustrate several stages of the slitting process. In radial position I the cutting tool 2 is positioned in contact with the outer surface of the tube 1. In the radial position IIA, the cutting tool 2 is in a initial cutting phase, at which the tube 1, in this example, is rotated over about 90 degrees and at which the cutting tool 2 has cut up to about two thirds of the wall thickness of the tube 1 in radial direction. In the radial position IIB, the cutting tool 2 has cut over the entire wall thickness up to the inner surface of the tube 1, at which it is rotated over about one-half of its circumference. The initial cutting phase is thereby completed. In this initial cutting phase the cutting tool 2 causes a spiral-like cutting line S in the material of the tube 1, of which line S two examples are provided in figure 1. After the initial cutting phase, a ring section is fully separated from the tube 1 in a final cutting phase, wherein the cutting tool 2 is taken through the material of the tube 1 over the full circumference thereof, i.e. one full rotation of the tube 1, whilst it is in the radial position III in which it partly projects beyond the inner surface of the tube 1. In this manner a continuous band 10 is obtained from the tube 1 to be processed further for its ultimate application in the endless tensile means of the pushbelt.

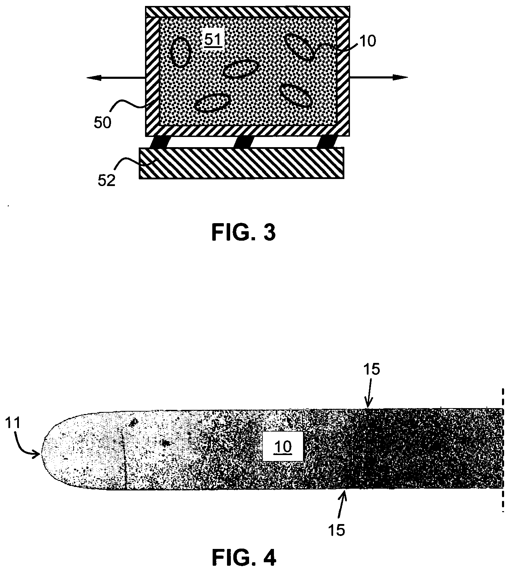

Figure 2 is a schematic representation of a typical cross section of a part of a band 10 obtained along the above-described cutting process, which band 10 includes an axially oriented side face 11 provided between the main, radially facing surfaces 15 of the band 10. The thus created side face 11 typically comprises a comparatively smooth cut section 12, a rough sheared section 13 and a clearly recognisable burr 14. For removing such burr 14, the band 10 is subsequently treated in a tumbling process also known per se, which process is schematically illustrated by figure 3 in a figurative cross section of a tumbling machine. During tumbling a number of bands 10 are put into a vessel 50 with more or less cone-shaped tumbling stones 51, which vessel is made to shake with respect to the floor 52 as indicated by the arrows in figure 3. By the stones 51 impacting the bands 10, not only the burr 14 is removed but also the side faces 11 of the band 10 are shaped by a rounding-off of in particular the side edges thereof to a certain extent, which a/o depends on the intensity of the tumbling process.

Figure 4 is a photographic representation of a typical cross section of a part of a band 10 including the axially oriented side face 11 thereof, which band 10 is obtained along the above-described cutting and tumbling processes. The general rounded-off shape of the side faces 11 obtained after tumbling is considered favourable in the pushbelt application of the band 10.

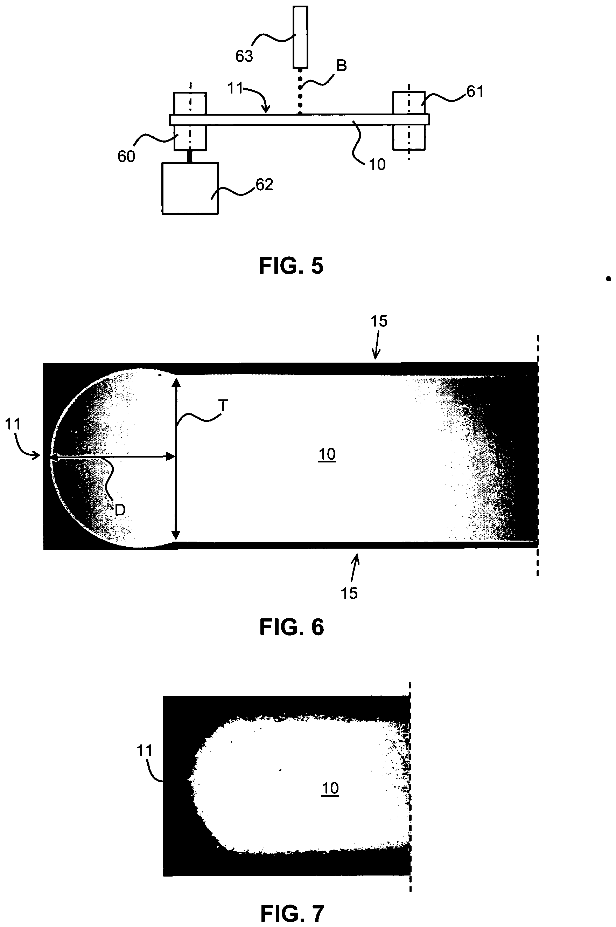

As an alternative to the above-described known tumbling process for shaping the axially oriented side faces 11 of the continuous band 10, including the removal of any burrs 14, the present invention provides for a new device and method that are discussed along the schematic side elevation thereof represented by figure 5. The device comprises a mounting jig that is composed of two essentially cylindrical rollers 60, 61 around which the band 10 is mounted in an at least slightly tensioned state. To be able to easily mount the band 10, the rollers 60, 61 are preferably arranged moveable relative to one another in radial direction. Further, the rollers 60, 61 are preferably arranged rotatable, whereby at least one roller 60 is driveable by a drive unit 62 such as an electric motor to be able to rotate the band 10. In between the rollers 60, 61 a laser 63 is mounted whereof the laser beam B is directed towards an axially oriented side face 11 of the band 10.

According to the invention the intensity of the laser 63 is set or controlled such that a section of the band 10 is melted over a limited depth D where the laser beam B irradiates the side face 11. Hereby, such melted section preferably extends over the full radial thickness T of the band 10, whereas in axial direction the extent D thereof preferably being comparable to, but preferably somewhat smaller than such thickness dimension T. The tangential dimension of the said melted section preferably being comparable to, but preferably somewhat larger than such thickness dimension T. After being melted the material is allowed to solidify again either by extinguishing the laser 63 or by moving away the laser beam B or the band 10.

In this method any burrs, scratches and the like disappear from the melted section 16 of the side face 11 of the band 10, while providing it with an essentially circular arc shaped rounding due to the surface tension in the molten band material. Such shape of the side face 11 that is formed naturally in the method according to the invention is illustrated in the photographic representation of figure 6. The thus created shape of the side face 11 is considered favourable in terms of the intended application of the band 10 in the pushbelt.

At least if the side face 11 of the band 10 is processed while facing upwards with respect to the gravitational force, the method according to the present invention is preferably performed in advance of the conventional process step of rolling the band 10 to reduce its radial thickness. Hereby, a thicker portion visible in figure 6 that may be formed near the lateral side of the band 10 when processed in accordance with the present invention is removed during rolling. Figure 7 shows the band 10 of figure 6 after such process step of rolling.

Preferably, the method is performed in a continuous process, wherein the band 10 is slowly rotated for approximately but preferably slightly more than one full revolution thereof, while the position of the laser 63 and the orientation of the laser beam B is fixed. Hereby, the said melted section moves along the entire circumference of the continuous band 10, i.e. of the side face 11 thereof. More preferably, the device is equipped with two lasers each positioned at an axial side of the band 10 such that both axially oriented side faces thereof can be processed simultaneously.

## Claims

1. Method for processing a continuous metal band (10) provided with two predominantly radially oriented main surfaces (15) and with two predominantly axially oriented side faces (11), in particular for shaping the said side faces (11) thereof, wherein an axially lateral edge part of the band (10), at least including a part of a respective side face (11) that extends over the full radial thickness (T) of the band (10) and that is provided with a burr, scratch or the like, is melted and subsequently allowed to solidify.

2. Method for forming a continuous metal band (10) provided with two radially oriented main surfaces (15) and with two axially oriented side faces (11), which method at least includes the steps of first cutting the band (10) from a tube (1), then subjecting the thus formed band (10) to the processing method according to claim 1 and finally subjecting the thus processed band (10) to a plastic deformation process for reducing its radial thickness (T).

3. Method according to claim 1 or 2, wherein the said part of the band (10) that is melted is irradiated by a laser beam (B) generated by a laser (63).

4. Method according to claim 1, 2 or 3, wherein the said part of the band (10) that is melted extends in axial direction over a distance (D) into the band (10), which axial distance (D) is similar to or slightly less than the said radial thickness (T) of the band (10).

5. Method according to one of the preceding claims, wherein the said part of the band (10) that is melted extends in tangential direction over a distance along the circumference of the band (10) that is similar to or slightly more than the said radial thickness (T) of the band (10).

6. Method according to claim 3, wherein the laser beam (B) and the band (10) are moved relative to one another, whereby the laser beam (B) gradually circumscribes, i.e. follows the contour of, the said side face (11) of the band (10), such that thereafter the entire respective side face (11) of the band (10) has been melted and subsequently allowed to solidify one section thereof at a time.

7. Method according to one of the preceding claims, wherein, in advance of the performing the processing method according to claim 1, the band (10) is mounted in an at least slightly tensioned state.

8. Pushbelt for a transmission, in particular for a continuously variable transmission, which pushbelt is provided with at least one set of a number of mutually nested metal bands (10) produced using the method from one of claims 1-7 and with a plurality of transverse elements that are slidable along the longitudinal circumference of the set of metal bands (10).

## Patentansprüche

1. Verfahren zum Verarbeiten eines endlosen Metallbands (10), das mit zwei vorwiegend radial ausgerichteten Hauptflächen (15) und mit zwei vorwiegend axial ausgerichteten Seitenflächen (11) versehen ist, insbesondere zum Formen der Seitenflächen (11) desselben, wobei ein axial seitlicher Randteil des Bands (10), der wenigstens einen Teil einer entsprechenden Seitenfläche (11) umfasst, der sich über die volle radiale Dicke (T) des Bands (10) erstreckt und der mit einem Grat, einer Riefe oder dergleichen versehen ist, geschmolzen und anschließend aushärten gelassen wird.

2. Verfahren zum Ausbilden eines endlosen Metallbands (10), das mit zwei radial ausgerichteten Hauptflächen (15) und mit zwei axial ausgerichteten Seitenflächen (11) versehen ist, wobei das Verfahren wenigstens die folgenden Schritte umfasst: zunächst Schneiden des Bands (10) aus einem Rohr (1), dann Unterziehen des so gebildeten Bands (10) dem Verarbeitungsverfahren nach Anspruch 1 und schließlich Unterziehen des so verarbeiteten Bands (10) einem plastischen Verformungsprozess zum Reduzieren seiner radialen Dicke (T).

3. Verfahren nach Anspruch 1 oder 2, wobei sich der Teil des Bands (10) der geschmolzen wird, durch einen, von einem Laser (63) erzeugte Laserstrahl (B) bestrahlt wird.

4. Verfahren nach Anspruch 1, 2 oder 3, wobei sich der Teil des Bands (10), der geschmolzen wird, in axialer Richtung über einen Abstand (D) in das Band (10) erstreckt, wobei der axiale Abstand (D) gleich oder geringfügig kleiner als die radiale Dicke (T) des Bands (10) ist.

5. Verfahren nach einem der vorhergehenden Ansprüche, wobei sich der Teil des Bands (10), der geschmolzen wird, in tangentialer Richtung über einen Abstand entlang dem Umfang des Bands (10) erstreckt, der gleich oder geringfügig größer als die radiale Dicke (T) des Bands (10) ist.

6. Verfahren nach Anspruch 1 oder 2, wobei der Laserstrahl (B) und das Band (10) relativ zueinander bewegt werden, wodurch der Laserstrahl (B) auf eine solche Weise nach und nach die Kontur der Seitenfläche (11) des Bands (10) umschreibt, d.h. derselben folgt, dass danach die gesamte entsprechende Seitenfläche (11) des Bands (10) geschmolzen und anschließend Abschnitt für Abschnitt aushärten gelassen worden ist.

7. Verfahren nach einem der vorhergehenden Ansprüche, wobei vor dem Durchführen des Verarbeitungsverfahrens nach Anspruch 1 das Band (10) in einem wenigstens geringfügig zugbeanspruchten Zustand befestigt wird.

8. Schubriemen für ein Getriebe, insbesondere für ein stufenloses Getriebe, wobei der Schubriemen mit wenigstens einem Satz einer Anzahl von gegenseitig ineinander geschachtelten Metallbändern (10), die unter Verwendung des Verfahrens nach einem der Ansprüche 1 bis 6 hergestellt worden sind, und mit einer Vielzahl von quer verlaufenden Elementen versehen ist, die entlang dem Längsumfang des Satzes von Metallbändern (10) verschiebbar sind.

## Revendications

1. Procédé pour traiter une bande métallique continue (10) pourvue de deux surfaces principales principalement orientées radialement (15) et avec deux faces latérales principalement orientées axialement (11), en particulier pour façonner lesdites faces latérales (11) de celle-ci, dans lequel une partie de bord axialement latérale de la bande (10), incluant au moins une partie d'une face latérale respective (11) qui s'étend pardessus l'épaisseur radiale entière (T) de la bande (10) et qui est pourvue d'une bavure, rayure ou analogue, est fondue et ensuite laissée se solidifier.

2. Procédé pour former une bande métallique continue (10) pourvue de deux surfaces principales orientées radialement (15) et de deux faces latérales orientées axialement (11), lequel procédé inclut au moins les étapes, en premier, de la découpe de la bande (10) à partir d'un tube (1), puis de la soumission de la bande ainsi formée (10) au procédé de traitement selon la revendication 1 et pour finir de la soumission de la bande ainsi traitée (10) à un processus de déformation plastique pour réduire son épaisseur radiale (T).

3. Procédé selon la revendication 1 ou 2, dans lequel ladite partie de la bande (10) qui est fondue, est irradiée par un faisceau laser (B) généré par un laser (63).

4. Procédé selon la revendication 1, 2 ou 3, dans lequel ladite partie de la bande (10) qui est fondue s'étend en direction axiale sur une distance (D) dans la bande (10), laquelle distance axiale (D) est similaire ou légèrement inférieure à ladite épaisseur radiale (T) de la bande (10).

5. Procédé selon une des revendications précédentes, dans lequel ladite partie de la bande (10) qui est fondue s'étend en direction tangentielle sur une distance le long de la circonférence de la bande (10) qui est similaire ou légèrement supérieure à ladite épaisseur radiale (T) de la bande (10).

6. Procédé selon la revendication 1 ou 2, dans lequel le faisceau laser (B) et la bande (10) sont déplacés l'un relativement à l'autre, moyennant quoi le faisceau laser (B) progressivement circonscrit, à savoir suit le contour de, ladite face latérale (11) de la bande (10), de telle sorte que, après cela, la face latérale respective entière (11) de la bande (10) ait été fondue et ensuite laissée se solidifier, une section de celle-ci à chaque fois.

7. Procédé selon une des revendications précédentes, dans lequel, avant la réalisation du procédé de traitement selon la revendication 1, la bande (10) est montée dans un état au moins légèrement tendu.

8. Courroie de poussée pour une transmission, en particulier pour une transmission à variation continue, laquelle courroie de poussée est pourvue d'au moins un ensemble d'un nombre de bandes métalliques mutuellement imbriquées (10) produites en utilisant le procédé d'une des revendications 1 à 6 et d'une pluralité d'éléments transversaux qui peuvent coulisser le long de la circonférence longitudinale de l'ensemble de bandes métalliques (10).
